**Europäisches Patentamt**

**European Patent Office**

**Office européen des brevets**

(19)

(11) Veröffentlichungsnummer: **0 227 585**
**B1**

(12) # EUROPÄISCHE PATENTSCHRIFT

(45) Veröffentlichungstag der Patentschrift:
07.02.90

(51) Int. Cl.⁴: **H02B 11/00**

(21) Anmeldenummer: **86730185.5**

(22) Anmeldetag: **05.11.86**

(54) **Trennkontaktanordnung für an Führungsteilen verfahrbar angeordnete Schaltgeräte.**

(30) Priorität: **29.11.85 DE 3542747**

(43) Veröffentlichungstag der Anmeldung:
**01.07.87 Patentblatt 87/27**

(45) Bekanntmachung des Hinweises auf die Patenterteilung:
**07.02.90 Patentblatt 90/6**

(84) Benannte Vertragsstaaten:
**DE FR GB IT SE**

(56) Entgegenhaltungen:
**FR-A- 1 065 389**
**GB-A- 641 506**
**US-A- 2 015 710**
**US-A- 2 647 247**
**US-A- 3 999 830**

(73) Patentinhaber: **Siemens Aktiengesellschaft,
Wittelsbacherplatz 2, D-8000 München 2(DE)**

(72) Erfinder: **Prietzel, Günter, Dipl.-Ing., Beerwinkel 39a,
D-1000 Berlin 20(DE)**
Erfinder: **Schultz, Rosemarie, Peter-Vischer-Strasse 1,
D-1000 Berlin 41(DE)**

**Beschreibung**

Die Erfindung betrifft eine Trennkontaktanordnung für an Führungsteilen verfahrbar angeordnete Schaltgeräte, wobei das Schaltgerät als Anschlußglieder starre Leiterstücke und die Führungsteile als Gegenstücke für die Leiterstücke an isolierenden Haltern begrenzt bewegbar befestigte Trennkontaktblöcke aufweist.

Eine Trennkontaktanordnung dieser Art ist beispielsweise durch die US-A-2 128 149 oder die US-A-3 308 348 bekannt geworden. Die isolierenden Halter und die Trennkontaktblöcke sind dabei an einen bestimmten Typ eines Schaltgerätes individuell angepaßte Teile. Daher ist es erforderlich, für ein Schaltgerät mit abweichend bemessener Stromtragfähigkeit und anderen Abmessungen eine entsprechend ausgebildete Trennkontaktanordnung bereitzuhalten, so daß für eine Schalterreihe mehrere völlig unterschiedliche Trennkontaktanordnungen benötigt werden.

Der Erfindung liegt die Aufgabe zugrunde, eine Trennkontaktanordung zu schaffen, die für die unterschiedlich bemessenen Schaltgeräte einer Schaltgerätereihe verwendbar ist und sich hierzu baukastenartig zusammensetzen läßt.

Diese Aufgabe wird gemäß der Erfindung dadurch gelöst, daß der Halter für die Trennkontaktblöcke jedes Poles des Schaltgerätes durch zwei die Trennkontaktblöcke jeweils teilweise zwischen sich aufnehmende Tragleisten gebildet ist. Im Unterschied zu einer Ausführung eines Halters etwa gemäß der US-A-3 308 348 wird somit der Halter stets aus zwei Teilen zusammengesetzt, wodurch die Möglichkeit geschaffen ist, die gleichen Teile für unterschiedlich große Trennkontaktblöcke zu benutzen. Da ferner die Tragleisten jeweils für die Trennkontaktblöcke eines Poles des Schaltgerätes gemeinsam sind und die Anschlußstellen der Pole übereinander liegen, ergibt sich Anordnung, die in der Breite in gleicher Weise variabel ist wie sich die Breite der Schaltgeräte innerhalb einer Reihe bei der Bemessung für unterschiedlich hohe Nennströme ändert.

Abgesehen von der hierdurch erzielten Verringerung des vorrätig zu haltenden Teile wird noch der Vorteil erzielt, daß die Tragleisten als Einzelteile ein geringeres Stückgewicht aufweisen als die bisher gebräuchlichen Halter und sich infolgedessen mit geringerem Aufwand fehlerfrei herstellen lassen.

Die Tragleiste kann für die Trennkontaktblöcke eines Poles des Schaltgerätes je eine den zugehörigen Trennkontaktblock teilweise aufnehmende Ausnehmung ausweisen. Beispielsweise können diese Ausnehmungen so bemessen sein, daß eine ausreichende Auflagefläche für Halteelemente der Trennkontaktblöcke vorhanden sind. Abweichend hiervon hat es sich als vorteilhaft erwiesen, die Ausnehmungen der Tragleisten für jeweils die halbe Breite der Trennkontaktblöcke zu bemessen. In der Standardausführung ergibt sich dann der zur Aufnahme der Trennkontaktblöcke benötigte Raum durch unmittelbar benachbarte Montage der Tragleisten.

An sich stellt es gegenüber den bisher üblichen, individuell für ein Schaltgerät hergestellten Trennkontaktanordnungen eine Erleichterung dar, wenn sich die Trennkontaktanordnungen für eine Schalterreihe mit nur zwei Typen von Tragleisten zusammensetzen lassen. Jedoch können nach einer Weiterbildung der Erfindung die Tragleisten mittensymmetrisch ausgebildet sein, derart, daß die Trennkontaktblöcke zwischen zwei mit einander zugekehrten Ausnehmungen fluchtend montierten gleichen Tragleisten symmetrisch aufgenommen werden. In diesem Fall wird nur ein Typ einer Tragleiste benötigt, die sowohl als rechte wie als linke Tragleiste verwendbar ist.

Im Prinzip eignen sich die beschriebenen Tragleisten für Trennkontaktblöcke unterschiedlicher Ausführung. Besonders geeignet sind jedoch Trennkontaktblöcke etwa gemäß der US-A-4 486 636, deren parallel zueinander angeordnete Kontaktlamellen zwischen Seitenwänden angeordnet sind, die zu Befestigung dienende Fortsätze aufweisen. Zur Befestigung solcher Trennkontaktblöcke können die Ausnehmungen der Tragleisten eine Absatzfläche aufweisen, auf der ein Spannstück aufliegt, das an beiden Tragleisten befestigt ist und die Vorsprünge der Seitenteile der Trennkontaktblöcke übergreift. Soll ein breiterer Trennkontaktblock benutzt werden, so können entsprechend bemessene Spannstücke verwendet und hierdurch die Anordnung an die unterschiedlich bemessenen Trennkontaktblöcke angepaßt werden.

An der dem Trennkontaktblock abwandten Seite kann ein weiteres Spannstück angeordnet sein, das eine Auflagefläche für ein mit dem Trennkontaktblock in leitender Verbindung stehendes Leiterstück und Befestigungsmittel für das Leiterstück aufweist. Auf diese Weise werden nicht nur Teile leicht montiert miteinander verbunden, sondern es entsteht auch eine sehr feste und hohen Stromkräften gewachsene Anordnung.

Sollen wenigstens zwei Trennkontaktblöcke unmittelbar benachbart angeordnet werden, um einen entsprechend hohen Strom übertragen zu können, so sind die gleichen Tragleisten verwendbar, wie sie für die Einzelanordnung von Trennkontaktblöcken vorgesehen sind. In diesem Fall können die Tragleisten mit einem entsprechenden Abstand angeordnet und die erwähnten Spannstücke für diesen Abstand bemessen sein, wobei in dem Raum zwischen den Tragleisten und den Spannstücken isolierende Distanzstücke angeordnet sind. Auch diese Distanzstücke sind als einheitliche Teile verwendbar, um Trennkontaktanordnungen mit zwei, drei oder mehreren Trennkontaktblöcken nebeneinander herzustellen. Es empfiehlt sich in diesem Zusammenhang, die Spannstücke und die Distanzstücke durch Verbindungsmittel gegeneinander zu verspannen.

Für alle beschriebenen Abwandlungen der Trennkontaktanordnung eignet sich gleichermaßen ein Gesamtaufbau, bei dem die Tragleisten für die Trennkontaktblöcke bzw. Gruppen von Trennkontaktblöcken mit ihren Enden an jeweils einem Querträger der Führungsteile befestigt sind und bei dem zwischen den Trennkontaktblöcken bzw. Gruppen von Trennkontaktblöcken die Querträger verbindende Stützglieder angeordnet sind. In diesem Fall wird eine gute Stabilität der Anordnung erhalten, obwohl es nur erforderlich ist, die Querträger mit ihren Enden an den Führungsteilen zu befestigen.

Die Erfindung wird im folgenden anhand der in den Figuren dargestellten Ausführungsbeispiele näher erläutert.

Die Figur 1 zeigt in einer Draufsicht einen vereinfacht dargestellten Einschubrahmen für einen Niederspannungs-Leistungsschalter mit einer Trennkontaktanordnung.

In der Figur 2 ist der Einschubrahmen gemäß der Figur 1 in einer abgebrochen dargestellten Seitenansicht gezeigt.

Die Figuren 3 bis 7 zeigen unterschiedliche Ansichten bzw. Schnitte einer Tragleiste. Hierbei zeigt die Figur 3 die den Trennkontaktblöcken zugewandte (innere) Seite der Tragleiste, die Figur 5 eine Seitenansicht der Tragleiste und die Figur 6 die den Trennkontaktblöcken abgewandte (äußere) Seite der Tragleisten. Die Figur 4 ist der Schnitt IV/IV in Figur 3, während die Figur 7 den Schnitt VII/VII in Figur 6 zeigt.

Die Figur 8 zeigt beidseitig einer Mittellinie unterschiedliche Ausführungsformen von Trennkontaktanordnungen für einen dreipoligen Niederspannungs-Leistungsschalter, wobei den Anschlüssen jedes Poles des Leistungsschalters jeweils ein Trennkontaktblock bzw. zwei Trennkontaktblöcke zugeordnet sind.

Die Figuren 9, 10 und 11 zeigen ein Distanzstück in einer Ansicht auf die den Trennkontaktblöcken abgewandte Seite, einen Schnitt sowie eine Ansicht auf die den Trennkontaktblöcken zugewandte Seite.

In der Figur 12 ist ein Schnitt durch einen Träger mit eingesetztem Trennkontaktblock entsprechend der Linie XII - XII in Figur 8 dargestellt.

Die Figur 13 zeigt eine Ausführungsform eines Spannstückes.

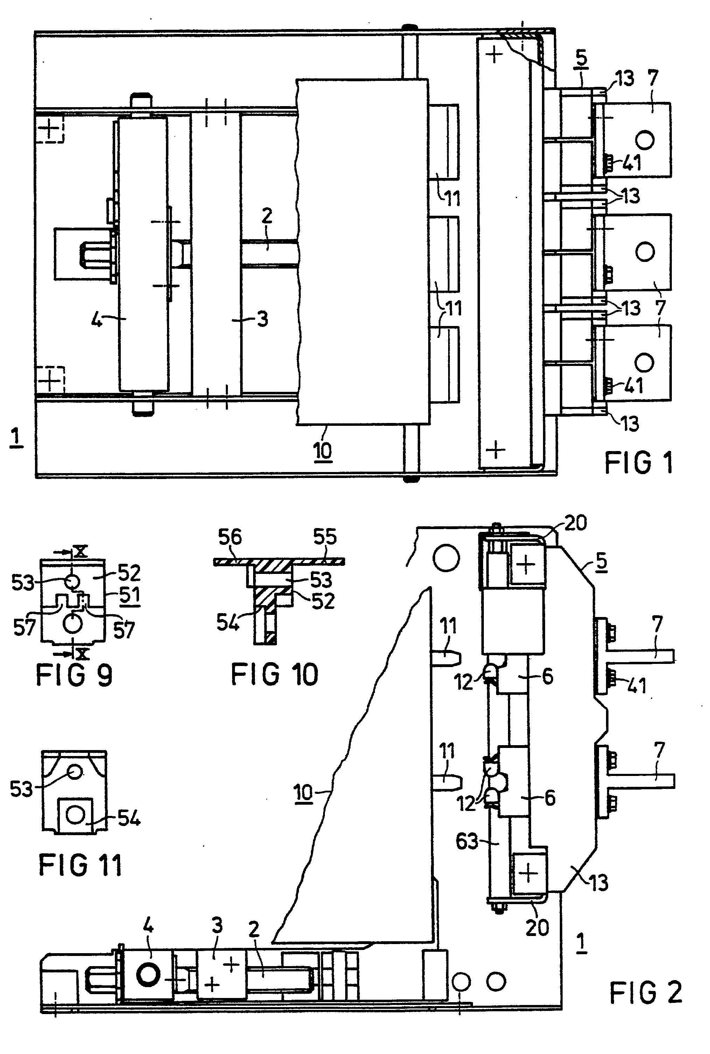

Der in der Figur 1 gezeigte Einschubrahmen 1 ist zum Einbau in eine Schaltanlage vorgesehen. Er enthält alle Teile, die zur Aufnahme eines abgebrochen gezeigten geeigneten Niederspannungs-Leistungsschalters 10 benötigt werden, um diesen in eine Betriebsstellung sowie in eine Trennstellung bringen zu können. Zur Vereinfachung sind nicht alle hierfür benötigten Teile gezeigt; dargestellt ist jedoch eine Gewindespindel 2 mit einem Mutterstück 3 sowie eine mit dem Gehäuse des Leistungsschalters in Verbindung zu bringende Traverse 4. Der Einschubrahmen 1 ist ein aus Blechteilen zusammengesetztes rahmenartiges Gebilde, dessen Aufbau einer geeigneten Bauart entsprechen kann. An der Rückseite des Einschubrahmens 1 befindet sich eine Trennkontaktanordnung 5, die an ihrer dem Leistungsschalter zugewandten Seite Trennkontaktblöcke 6 sowie an ihrer dem Leistungsschalter abgewandten Seite Anschlußstücke 7 aufweist. Wie den Figuren 1 und 2 zu entnehmen ist, besitzt die Trennkontaktanordnung 5 für jeden Pol des Leistungsschalters 10 zwei übereinander angeordnete Anschlußstücke 7. Insgesamt sind sechs Anschlußstücke 7 vorhanden. Bei abweichender Polzahl und/oder zwei oder mehreren Anschlußstellen je Klemmstelle eines Poles kann eine dementsprechend größere Anzahl von Anschlußstücken vorhanden sein.

Die Trennkontaktblöcke 6 für jeden Pol des Einschubrahmens 1 wirken mit starren Leiterstücken 11 des Leistungsschalters 10 zusammen und weisen hierzu gegen Federkraft bewegliche Brückenkontaktstücke 12 auf, wie dies beispielsweise in der US-A-4 486 636 beschrieben ist. Die Trennkontaktblöcke 6 sind an Haltern befestigt, die durch Tragleisten 13 gebildet sind. Entsprechend der dreipoligen Anordnung sind somit insgesamt sechs Tragleisten 13 vorhanden, wie insbesondere den Figuren 1, 11 und 12 zu entnehmen ist. Bei einer vierpoligen Ausführung werden dementsprechend acht Tragleisten 13 benutzt.

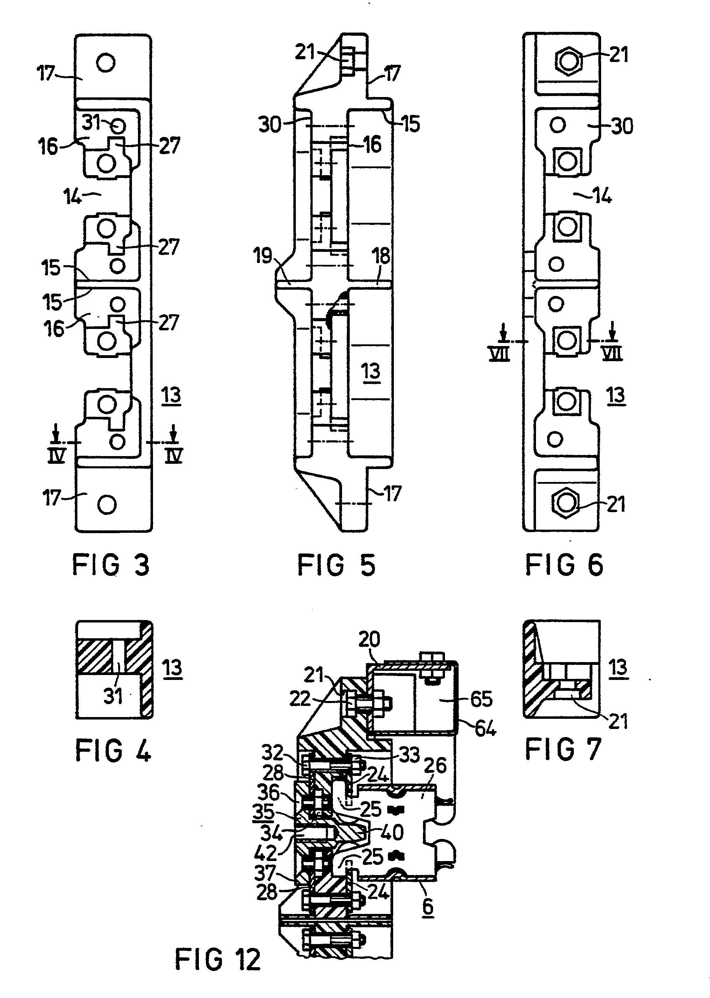

Einzelheiten der Tragleisten 13 werden im folgenden anhand der Figuren 3 bis 7 erläutert. Den Figuren 3, 5 und 6 ist zu entnehmen, daß die Tragleisten 13 mittensymmetrisch ausgebildet sind und sich somit in fluchtender Anordnung sowohl als rechte wie auch als linke Tragleiste verwenden lassen. Es baucht daher nur dieser eine Typ von Tragleiste für sämtliche Ausführungen der Trennkontaktanordnung bereitgehalten zu werden. Ein solches, vorzugsweise aus einem isolierenden Kunststoff durch Spritzgießen herzustellendes Teil besitzt infolgedessen ein geringeres Gewicht als ein den kompletten Halter bildendes Isolierstoffteil und ist daher einfacher herstellbar, wobei gleichzeitig die Gefahr von Herstellungsfehlern verringert ist.

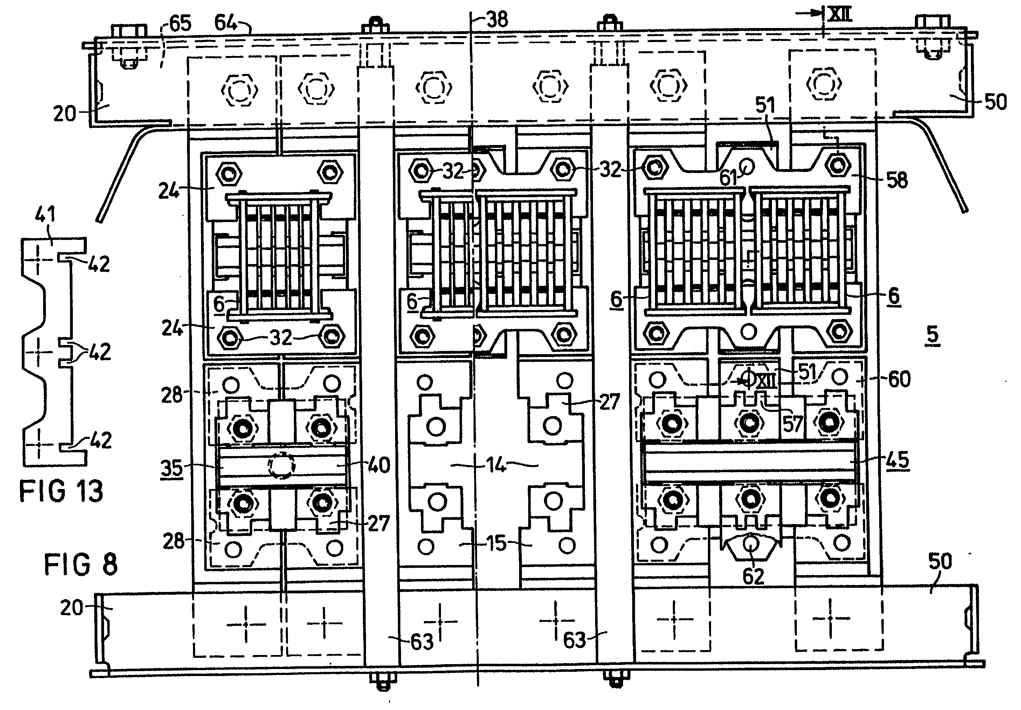

Wie insbesondere die Figuren 3 und 6 zeigen, besitzen die Tragleisten entsprechend dem Abstand der starren Leiterstücke 11 des Leistungsschalters 10 Aussparungen 14, die zum Durchtritt der Leiterstücke bestimmt sind. Die Aussparungen 14 befinden sich jeweils in der Mitte einer inneren Ausnehmung 15. Wie insbesondere die Figuren 5 und 13 zeigen, weist jede Ausnehmung 15 eine Absatzfläche 16 auf, die in einer noch zu beschreibenden Weise zur Befestigung der Trennkontaktblöcke 6 benutzt wird. An dem oberen und dem unteren Ende besitzen die Tragleisten einen ebenen Abschnitt 17, der zur Befestigung der Tragleisten an insbesondere den Figuren 1, 8 und 12 zu entnehmenden Querträgern 20 dienen. Um den Vorgang der Befestigung zu erleichtern, sind die Endteile der Tragleisten 13 an ihrer Außenseite zur Aufnahme des Kopfes einer Sechskantschraube mit einer Sechskantvertiefung 21 und einer anschließenden Durchgangsöffnung versehen.

Weitere Einzelheiten der Trennkontaktanordnung sind der Figur 8 zu entnehmen, die durch eine strichpunktierte Linie 38 in zwei unterschiedliche Ausführungsbeispiele gegliedert ist. Gemäß dem linken Teil der Figur 8 sind jeweils zwei Tragleisten 13 mit einander zugewandten Aussparungen 14 unmittelbar nebeneinander angeordnet. Hierbei sind die Tragleisten 13 mittels Sechskantschrauben 22, die in die Sechskantöffnungen 21 eingelegt sind, an einem oberen und einem unteren Querträger 20 befestigt. Diese Anordnung ist im Querschnitt auch der Figur 12 zu entnehmen. Die Ausnehmungen 15 der Tragleisten 13 ergänzen sich hierbei derart, daß ein Raum zur Aufnahme jeweils eines Trennkontaktblockes 6 gebildet wird, wie er in der Figur 8 im oberen Teil des linken Paares von Tragleisten 13 und in der Figur 12 dargestellt ist. Der Trennkontaktblock 6 wird durch Spannstücke 24 gehalten, die jeweils zwei obere und zwei untere Vorsprünge 25 von Seitenteilen 26 der Trennkontaktblöcke 6 übergreifen, wie dies besonders in dem Schnitt gemäß der Figur 3 zu erkennen ist. Die Spannstücke 24 liegen auf der Absatzfläche 16 (Figur 5) im Randbereich der Ausnehmungen 15 auf. Durch eine geeignete Bemessung der Teile ist dafür gesorgt, daß sich der Trennkontaktblock 6 insbesondere vertikal etwas verschieben kann und hierdurch eine kräftearme Anpassung an die Stellung der Leiterstücke 11 des Leistungsschalters 10 (Figur 2) erreicht wird. Hierzu sind den Ausnehmungen 15 Taschen 27 für die Vorsprünge 25 vorgesehen.

Während bei der vorstehend beschriebenen Anordnung die Führung der Trennkontaktblöcke 6 durch die Taschen 27 erfolgt, kann sowohl die Führung als auch die Halterung der Trennkontaktblöcke 6 durch Spannstücke 41 gemäß der Figur 13 erfolgen, die Einschnitte 42 zum kammartigen Übergreifen der Seitenteile 26 der Trennkontaktblöcke 6 besitzen. Die Vorsprünge 25 werden dann nicht benötigt oder können kleiner ausgeführt sein. Das Spannstück 41 ist für zwei Trennkontaktblöcke bemessen.

Mit den Spannstücken 24 wirken weitere Spannstücke 28 zusammen, die in äußeren Ausnehmungen 30 (Figuren 5 und 6) aufliegen. Durch Bohrungen der Spannstücke 24 und 28 sowie durch Durchgangsöffnungen 31 der Tragleisten 13 erstrecken sich Schrauben 32, die in Verbindung mit Muttern 33 als Befestigungsmittel dienen. Diese Schrauben können zugleich zur Verbindung der Anschlußstücke 7 (Figur 1 und 2) mit Leiterstücken 35 (Figur 12) benutzt werden.

Die Figur 12 zeigt, daß die äußeren Spannstücke 28 eingesetzte Muttern 34 besitzen, die zur Befestigung von Leiterstücken 35 mittels Schrauben 36 dienen. Die Leiterstücke 35 weisen eine im wesentlichen ebene Außenfläche 37 zur Anbringung der in den Figuren 1 und 2 gezeigten Anschlußstücke 7, sowie einen inneren, dem zugehörigen Trennkontaktblock 6 zugewandten Steg 40 auf, wie dies der Figur 12 zu entnehmen ist. Die Leiterstücke 35 sind mit Gewindelöchern 42 versehen, um einen sonstigen Anschlußleiter befestigen zu können.

Das im linken Teil der Figur 8 gezeigte Ausführungsbeispiel einer Trennkontaktanordnung weist für jede Anschlußstelle eines Leistungsschalters jeweils einen Trennkontaktblock 6 auf, so daß insgesamt 6 Trennkontaktblöcke vorhanden sind. Demgegenüber ist die Ausführung einer Trennkontaktanordnung gemäß dem rechten Teil der Figur 8 für einen Leistungsschalter vorgesehen, der bei gleichem vertikalem Abstand der Anschlußstücke 7 für einen höheren Nennstrom bemessen ist und infolgedessen ein Leiterstück 45 mit einem größeren Leiterquerschnitt für den Stromübergang benötigt. Hierzu sind jeder Anschlußstelle statt eines Trennkontaktblockes jeweils zwei Trennkontaktblöcke 6 zugeordnet. Dementsprechend sind die Tragleisten 13 mit einem größeren Abstand an gleichfalls länger bemessenen Querträgern 50 befestigt. Hierbei liegt jeder Trennkontaktblock 6 in einer mit der Figur 12 vollkommen übereinstimmenden Weise mit den Vorsprüngen 25 eines Seitenteiles 26 in den Ausnehmungen 15 der Tragleisten 13. Für die aneinander angrenzenden Vorsprünge 25 der benachbarten Trennkontaktblöcke 6 dienen als Auflage Distanzstücke 51 gemäß den Figuren 9, 10 und 11, die nachstehend erläutert werden.

Die Distanzestücke 51 besitzen entsprechend den Absatzflächen 16 der Ausnehmungen 15 der Tragleisten 13 eine Absatzfläche 52 sowie eine Durchgangsöffnung 53 für eine Spannschraube. Ausgehend von der Absatzfläche 52 sind nebeneinander zwei taschenartige Aussparungen 57 für die Vorsprünge 25 der denachbarten Trennkontaktblöcke vorgesehen. Eine weitere Aussparung 54 ist angebracht, um einen Raum für eine Mutter entsprechend der Mutter 34 in Figur 12 zu schaffen. Ferner besitzt jedes Distanzstück 51 einen inneren Steg 55 und einen äußeren Steg 56. Die Höhe dieser Stege ist entsprechend der Höhe von die Ausnehmungen 15 der Tragleisten 13 trennenden Rippen 18 bzw. 19 bemessen, um möglichst große Kriechwege zwischen spannungführenden und geerdeten Bauteilen zu schaffen. Anstelle der Spannstücke 24 und 28 sind in dem Beispiel gemäß dem rechten Teil der Figure 8 entsprechend breitere Spannstücke 57 und 60 vorgesehen, die zusätzlich zu Durchgangsöffnungen nahe den Ecken etwa in der Mite eine weitere Durchgangsöffnung 61 bzw. 62 für die Distanzstücke 51 durchsetzende Spannschrauben 32 aufweisen. Auf diese Weise wird trotz des vergrößerten Abstandes der Tragleisten 13 eine äußerst stabile Anordnung gebildet.

Wie die Figur 8 ferner zeigt, befinden sich zwischen den jedem Pol zugeordneten Trennkontaktblöcken bzw. Gruppen von Trennkontaktblöcken Stützglieder 63, bei denen es sich beispielsweise um aus Metall bestehende Gewindestangen oder an ihren Enden mit Gewinde versehenen Profilstangen handeln kann. Die Stützglieder 63 sind in gleicher Weise bei dem Ausführungsbeispiel gemäß den linken oder dem rechten Teil der Figur 8 verwendbar, da der vertikale Abstand der Querträger 20 bzw. 60 gleich ist. Durch die Stützglieder 63 wird die Gesamtanordnung derart gegenüber den besonders im Kurzschlußfall auftretenden sehr hohen Stromkräften derart versteift, daß es ausreicht, die Querträger 20 bzw. 50 zur an ihren Enden an dem Einschubträger 1 gemäß den Figuren 1 und 2 zu befestigen. Vorzugsweise sind die Stützglieder 63 mit einem isolierenden Überzug versehen oder mit Isolierstoff beschichtet.

Die Querträger 20 und 50 sind als Winkelstücke ausgebildet. Werden diese durch winkel- oder U-förmige Profilstücke 64 gemäß den Figuren 8 und 12 zu einem geschlossenen Profil ergänzt, so wird nicht nur die Biegesteifigkeit der Anordnung merklich vergrößert, sondern es entsteht auch ein Kanal 65, durch den beliebige Hilfsleitungen von der einen Seite des Einschubrahmens 1 zur anderen Seite geschützt geführt werden können.

Bei dem Vergleich der beiden Ausführungsformen gemäß der Figur 8 ist leicht zu erkennen, daß wesentliche Teile der Anordnung, inspesondere die Tragleisten, die Trennkontaktblöcke und die Distanzstücke sowie die Stützglieder auch dann verwendbar sind, wenn eine Trennkontaktanordnung für einen Leistungsschalter einer weiteren Baugröße erstellt werden soll, für den jeweils drei Kontaktblöcke pro Anschlußstelle benötigt werden. In diesem Fall werden lediglich größere Leiterstücke mit einem dem Profil der Leiterstücke 35 oder 45 entsprechenden Profil und größere Spannstücke entsprechend den Spannstücken 57 und 60 in der Figur 9 benötigt.

**Patentansprüche**

1. Trennkontaktanordnung (5) für an Führungsteilen (1) verfahrbar angeordnete Schaltgeräte, wobei das Schaltgerät (10) als Anschlußglieder starre Leiterstücke (11) und die Führungsteile (1) als Gegenstücke für die Leiterstücke (11) an isolierenden Haltern (13) begrenzt bewegbar befestigte Trennkontaktblöcke (6) aufweist, **dadurch gekennzeichnet,** daß der Halter für die Trennkontaktblöcke (6) jedes Poles des Schaltgerätes (10) durch zwei die Trennkontaktblöcke (6) jeweils teilweise zwischen sich aufnehmende Tragleisten (13) gebildet ist.

2. Trennkontaktanordnung nach Anspruch 1, **dadurch gekennzeichnet,** daß jede Tragleiste (13) für die Trennkontaktblöcke (6) eines Poles je eine den zugehörigen Trennkontaktblock (6) teilweise aufnehmende Ausnehmung (15) aufweist.

3. Trennkontaktanordnung nach Anspruch 2, **dadurch gekennzeichnet,** daß die Ausnehmungen (15) der Tragleisten (13) für jeweils die halbe Breite der Trennkontaktblöcke (6) bemessen sind.

4. Trennkontaktanordnung nach Anspruch 2, **dadurch gekennzeichnet,** daß die Tragleisten (13) mittensymmetrisch ausgebildet sind, derart, daß die Trennkontaktblöcke (6) zwischen zwei mit einander zugekehrten Ausnehmungen (15) fluchtend montierten Tragleisten (13) symmetrisch aufgenommen werden.

5. Trennkontaktanordnung nach Anspruch 2, **dadurch gekennzeichnet,** daß zur Befestigung eines Trennkontaktblockes (6) wenigstens ein auf einer Absatzfläche (16) einer Ausnehmung (15) aufliegendes inneres Spannstück (24) dient, das Seitenteile (26) des Trennkontaktblockes (6) erfassend an beiden Tragleisten (13) befestigt ist.

6. Trennkontaktanordnung nach Anspruch 5, **dadurch gekennzeichnet,** daß die Tragleisten (13) mit Taschen (27) zur Aufnahme von Vorsprüngen (25) an Seitenteilen (26) der Trennkontaktblöcke (6) versehen und die Spannstücke (24) die Vorsprünge (25) überdeckend ausgebildet sind.

7. Trennkontaktanordnung nach Anspruch 5, **dadurch gekennzeichnet,** daß die Spannstücke (41) mit Einschnitten (42) zum gabelartigen Übergreifen von Seitenteilen der Trennkontaktblöcke (6) versehen sind.

8. Trennkontaktanordnung nach Anspruch 5, **dadurch gekennzeichnet,** daß an der dem Trennkontaktblock (6) abgewandten Seite ein weiteres, äußeres Spannstück (28) angeordnet ist, das eine Auflagefläche für ein mit dem Trennkontaktblock (6) in Verbindung stehendes Leiterstück (35) aufweist und Befestigungsmittel (34) für das Leiterstück (35) aufweist.

9. Trennkontaktanordnung nach Anspruch 5, **dadurch gekennzeichnet,** daß bei unmittelbar benachbarter Anordnung von wenigstens zwei Trennkontaktblöcken (6) die Tragleisten (13) mit einem entsprechenden Abstand angeordnet und die Spannstücke (24, 28) für diesen Abstand bemessen sind, wobei in dem Raum zwischen den Tragleisten (13) und den Spannstücken (24, 28) isolierende Distanzstücke (51) angeordnet sind.

10. Trennkontaktanordnung nach Anspruch 9, **dadurch gekennzeichnet,** daß die Spannstücke (24, 28) und die Distanzstücke (51) durch Verbindungsmittel (32, 33) gegeneinander verspannt sind.

11. Trennkontaktanordnung nach einem der vorangehenden Ansprüche, **dadurch gekennzeichnet,** daß die Tragleisten (13) für die Trennkontaktblöcke (6) bzw. die Gruppen von Trennkontaktblöcken (6) mit ihren Enden (17) jeweils an einem Querträger (20, 50) der Führungsteile (1) befestigt sind und daß zwischen den Trennkontaktblöcken bzw. Gruppen von Trennkontaktblöcken (6) eines Poles des Schaltgerätes (10) die Querträger (20, 50) verbindende Stützglieder (63) angeordnet sind.

12. Trennkontaktanordnung nach Anspruch 11, **dadurch gekennzeichnet ,** daß jeder Querträger als Winkelstück ausgebildet und durch ein weiteres winkelförmiges bzw. U-förmigen Profilstück (64) zur Vergrößerung der Biegesteifigkeit und zur Bildung eines Leitungskanals (65) zu einem geschlossenen Profil ergänzt ist.

**Revendications**

1. Dispositif à contacts de coupure (5) pour appareils-interrupteurs montés déplaçables sur des organes de guidage (1), l'appareil-interrupteur (10) présentant des tronçons de conducteurs rigides (11) comme éléments de connexion et les organes de guidage (1) présentant, comme éléments coopérant avec les tronçons de conducteurs (11), des blocs à contacts de coupure (6) fixés avec une mobilité limitée sur des supports isolants (13), caractérisé en ce que le support pour les blocs à contacts de coupure (6) de chaque pôle de l'appareil-interrupteur (10) est constitué par deux supports latéraux ou flasques (13) recevant entre eux, partiellement, les blocs à contacts de coupure (6).

2. Dispositif selon la revendication 1, caractérisé en ce que chaque flasque (13) présente, pour chacun des blocs à contacts de coupure (6) d'un pôle, une alvéole (15) recevant une partie du bloc à contacts de coupure correspondant (6).

3. Dispositif selon la revendication 2, caractérisé en ce que les alvéoles (15) des flasques (13) sont dimensionnées chacune pour la moitié de la largeur des blocs à contacts de coupure (6).

4. Dispositif selon la revendication 2, caractérisé en ce que les flasques (13) sont à symétrie médiane, de manière que les blocs à contacts de coupure (6) soient reçus symétriquement entre deux flasques (13) montés alignés avec les alvéoles (15) dirigées les unes vers les autres.

5. Dispositif selon la revendication 2, caractérisé en ce que, pour la fixation d'un bloc à contacts de coupure (6), on se sert d'au moins une pièce de serrage intérieure (24) appuyée sur un épaulement (16) dans une alvéole (15) et qui est fixée aux deux flasques en maintenant des parties latérales (26) du bloc à contacts de coupure (6).

6. Dispositif selon la revendication 5, caractérisé en ce que les flasques (13) sont pourvus de cavités (27) pour la réception de saillies (25) des parties latérales (26) des blocs à contacts de coupure (6) et les pièces de serrage (24) sont conformées pour recouvrir les saillies (25).

7. Dispositif selon la revendication 5, caractérisé en ce que les pièces de serrage (41) sont pourvues d'encoches (42) pour s'étendre à la façon d'une fourche de part et d'autre de parties latérales des blocs à contacts de coupure (6).

8. Dispositif selon la revendication 5, caractérisé en ce qu'une pièce de serrage (28) supplémentaire, extérieure, est disposée du côté éloigné du bloc à contacts de coupure (6), pièce de serrage qui présente une surface d'appui pour un morceau de conducteur (35) relié au bloc à contacts de coupure (6), ainsi que des moyens de fixation (34) pour ce morceau de conducteur (35).

9. Dispositif selon la revendication 5, caractérisé en ce que, lorsqu'au moins deux blocs à contacts de coupure (6) sont disposés directement l'un à côté de l'autre, les flasques (13) sont placés à un espacement correspondant et les pièces de serrage (24, 28) sont conçues pour cet espacement, avec disposition de pièces d'écartement (51) isolantes dans l'espace entre les flasques (13) et les pièces de serrage (24, 28).

10. Dispositif selon la revendication 9, caractérisé en ce que les pièces de serrage (24, 28) et les pièces d'écartement (51) sont serrées ensemble par des moyens de liaison (32, 33).

11. Dispositif selon une des revendications précédentes, caractérisé en ce que les flasques (13) pour les blocs à contacts de coupure (6) ou les groupes de blocs à contacts de coupure (6), sont fixés par leurs extrémités (17) à une traverse (20, 50) des organes de guidage (1) et que des éléments de soutien (63) reliant les traverses (20, 50), sont disposés entre les blocs à contacts de coupure ou les groupes de blocs à contacts de coupure (6) d'un pôle de l'appareil-interrupteur (10).

12. Dispositif selon la revendication 11, caractérisé en ce que chaque traverse est formée par une cornière qui est complétée en un profil fermé par une cornière supplémentaire ou un profilé en U (64) en vue de l'augmentation de la rigidité en flexion et pour la formation d'un canal (65) destiné au passage de canalisations.

**Claims**

1. Disconnecting contact arrangement (5) for switchgear movably arranged on guide parts (1), the switchgear (10) having as connection members rigid conductor pieces (11) and the guide parts (1) having as counterparts for the conductor pieces (11) disconnecting contact blocks (6) fastened, capable of limited movement, to insulating holders (13), characterised in that the holder for the disconnecting contact blocks (6) of each pole of the switchgear (10) is formed by two mounting strips (13) partially receiving between them the disconnecting contact blocks (6) in each case.

2. Disconnecting contact arrangement according to claim 1, characterised in that each mounting strip (13) has for the disconnecting contact blocks (6) of a pole one recess (15) for each appertaining disconnecting contact block (6), that recess partially receiving that block.

3. Disconnecting contact arrangement according to claim 2, characterised in that the recesses (15) of the mounting strips (13) are dimensioned for half the breadth of the disconnecting contact blocks (6) in each case.

4. Disconnecting contact arrangement according to claim 2, characterised in that the mounting strips (13) are formed centrosymmetrically in such a way that the disconnecting contact blocks (6) are symmetrically received between two mounting strips (13) assembled in alignment with recesses (15) facing each other.

5. Disconnecting contact arrangement according to claim 2, characterised in that for fastening a disconnecting contact block (6) at least one inner spanning piece (24) supported on an abutment surface (16) of a recess (15) serves, which, grasping side parts (26) of the disconnecting contact block (6), is fastened to both mounting strips (13).

6. Disconnecting contact arrangement according to claim 5, characterised in that the mounting strips (13) are provided with pockets (27) for receiving projections (25) on side parts (26) of the disconnecting contact blocks (6) and the spanning pieces (24) are constructed to cover the projections (25).

7. Disconnecting contact arrangement according to claim 5, characterised in that the spanning pieces (41) are provided with indents (42) for the fork-like overlapping of side parts of the disconnecting contact blocks (6).

8. Disconnecting contact arrangement according to claim 5, characterised in that on the side facing away from the disconnecting contact block (6) a further, outer spanning piece (28) is arranged, which has a bearing surface for a conductor piece (35) connected to the disconnecting contact block (6) and fastening means (34) for the conductor piece (35).

9. Disconnecting contact arrangement according to claim 5, characterised in that with directly adjacent arrangement of at least two disconnecting contact blocks (6), the mounting strips (13) are arranged at a corresponding spacing and the spanning pieces (24, 28) are dimensioned for this spacing, insulating distance pieces (51) being arranged in the space between the mounting strips (13) and the spanning pieces (24, 28).

10. Disconnecting contact arrangement according to claim 9, characterised in that the spanning pieces (24, 28) and the distance pieces (51) are braced against one another by connecting means (32, 33).

11. Disconnecting contact arrangement according to one of the preceding claims, characterised in that the ends (17) of the mounting strips (13) for the disconnecting contact blocks (6) or the groups of disconnecting contact blocks (6) are fastened in each case to one cross piece (20, 50) of the guide parts (1) and in that, between the disconnecting contact blocks or groups of disconnecting contact blocks (6) of a pole of the switchgear (10), support members (63) connecting the cross pieces (20, 50) are arranged.

12. Disconnecting contact arrangement according to claim 11, characterised in that each cross piece is formed as an angle piece and completed to a closed profile section by a further angular or u-shaped profile piece (64) to increase the flexural strength and to form a duct (65).

FIG 1

FIG 9

FIG 10

FIG 11

FIG 2

FIG 3

FIG 5

FIG 6

FIG 4

FIG 7

FIG 12

FIG 13

FIG 8